# EUROPEAN PATENT SPECIFICATION

(11) **EP 1 505 481 B1**
(45) Date of publication and mention of the grant of the patent: **10.01.2007**
(21) Application number: 03425480.5
(22) Date of filing: 18.07.2003
(51) Int. Cl.: G06F 3/023, G06F 1/16

(54) **A device and user activation arrangement therefor**
Eine Bediener-Aktivierungsvorrichtung sowie Anordnung hierzu
Un dispositif et un ensemble d'activation utilisateur

(43) Date of publication of application: 09.02.2005
(73) Proprietor: MOTOROLA, INC., Schaumburg, IL 60196 (US)
(72) Inventor: Caci, Vincenzo, 90146 Palermo (PA) (IT); Giacosa, Fausto, 10020 Brusasco (TO) (IT); Monelli, Paolo, 10098 Rivoli (TO) (IT)
(74) Representative: Cross, Rupert Edward Blount

(56) References cited:
- WO-A-01/75580
- WO-A-03/021922
- DE-A- 4 114 450
- US-A- 5 804 780

## Description

### Field of the invention

The invention relates to a device and a user activation arrangement therefor and in particular to a user activation arrangement for a portable device such as a mobile phone.

### Background of the Invention

In the last decades, the use of electronic devices, and in particular portable electronic devices, has become increasingly widespread. For example, portable devices such as Personal Digital Assistants (PDAs), personal music players (e.g. MP3 players) and in particular mobile phones have become commonplace.

Operation of electronic devices is typically by use of manually operable buttons or keys forming an electrical contact when pressed. Such buttons are typically mechanical arrangements that allow for a suitable user activation and specifically allows for convenient operation by a use of a finger. The number and layout of buttons on a given device depends on the specific characteristics and requirements of that device. For example, portable computers typically comprise a keyboard having a large number of keys or buttons including a full alphanumeric set of keys arranged in the well known QWERTY format. In contrast, a mobile phone typically comprises around 15 keys including the 10 numeric digits.

However, it is desirable to reduce the number of buttons or keys required for an electronic device in order to reduce cost and facilitate operation. In particular, the continuing size reduction of portable devices has resulted in a desire to reduce the number of buttons in order to allow these to be sufficiently large to be conveniently operated by a user's finger. On the other hand, the increased flexibility, versatility and functionality of these devices require an increasing number of different user inputs thereby leading to an increased number of buttons or keys.

In order to solve these conflicting interests, electronic devices frequently adopt an approach where buttons are assigned different functionality at different times. For example, the numeric keys of a mobile phone may also be used for text input. However, this complicates operation of the device as it may not be clear to the user what the current functionality of a given key is. Typically, the key (or the surrounding area of the key) is permanently labelled by the possible functions that the key may have. For example, a numeric key for a mobile phone may be labelled with the corresponding digit as well as the letters which may be entered using this key. Evidently, this leads to a confusing and unsightly labelling which is not convenient to a user.

In some devices, this has been addressed by inclusion of a touch sensitive display. In such displays, a region of the display may be used to represent a button or key. The display region may show an image corresponding to the current function of the button. A user may tap the display region with a pen or similar tool and this will be detected by the device which then performs the function associated with the button.

Although a touch sensitive display may provide a flexible input medium which can facilitate operation and improve user friendliness, it also has a number of disadvantages. In particular, a touch sensitive display comprises a complex arrangement of many different integrated layers. This results in a complicated manufacturing process and a relatively high cost. Furthermore, in comparison to conventional mechanical buttons, touch displays are more mechanically fragile and therefore less durable and shock resistant. In addition, touch sensitive displays typically have a preference for a firm pressure applied over a relatively small area and therefore is typically operated by use of a dedicated stylus or pen. Also, touch displays do not comprise any moving parts and therefore do not provide a tactile feedback to a user.

Hence, an improved user activation arrangement for a device would be advantageous and in particular a user activation arrangement allowing for increased flexibility, user friendliness, ease of operation, low cost, easy manufacture, mechanical robustness and/or providing tactile feedback would be advantageous.

US patent no. 5,804,780 discloses a virtual touch screen switch for an electronic device including a transparent push window disposed over a display assembly. The transparent push window functions similar to a toggle switch. The push window is disposed in a display opening of the device and is pivotable between a neutral position and one or more actuating positions where an actuator, mounted to a pivot frame that surrounds the push window, actuates a PCB switch. The push window is sandwiched between an upper foam rubber spring/gasket and a lower foam rubber spring/gasket that are disposed surrounding the push window against the pivot frame.

### Summary of the Invention

Accordingly, the Invention seeks to preferably mitigate, alleviate or eliminate one or more of the above mentioned disadvantages singly or in any combination.

According to a first aspect of the invention there is provided a user activation arrangement for a device having a display as recited in claim 1 of the accompanying claims.

The invention allows for a user activation arrangement which is very flexible and/or facilitates operation of the device by a user. The translucency of the first part of the activation member allows for the display region of the display to be visible to the user. This allows for a close association between the displayed image of the display region and the user arrangement. Hence, an association between a display region and a given user arrangement is achieved without requiring a touch sensitive display. The invention allows for an image of the display region to be associated with a mechanical button or key arrangement and specifically to be viewable through an activation member of the button or key. The image of the display region may be dynamically adjusted and customised to assist the user in the operation of the device. The user activation arrangement does not require an integrated manufacturing of the display and the user activation arrangement. Rather cheap and low complexity manufacturing of a simple mechanical user activation arrangement may be combined with a cheap and low complexity manufacturing of a display. Thus simple manufacturing may be achieved. In addition, the activation member and activation sensor may be implemented such that a tactile feed back is provided to the user.

The invention thus allows for a user activation arrangement that may combine the advantages of a touch sensitive display and a conventional mechanical button or key.

Furthermore, the user activation arrangement allows for increased design variations and may allow for a visually appealing design of not only the user activation arrangement but of the device as a whole.

The translucent first part is preferably sufficiently translucent to allow a clear image of the display region to be viewed through the first part. Specifically, the first translucent part may be substantially transparent. The activation indication may be any suitable activation indication such as for example an electrical contact being formed and/or an electrical signal being generated.

The invention furthermore allows for an implementation wherein the illumination of the activation member may be achieved through the backlighting system of the display. This may avoid spot lights behind the keypad which normally tend not to provide the desired uniformity.

According to a feature of the invention, the activation member furthermore comprises a second part not overlapping the display. This allows for an implementation wherein the second part may be mounted or provide functionality which are disadvantageous to provide by the first translucent overlapping part.

According to another feature of the invention, the second part of the activation member is mounted on a support element of the device. The support element may specifically be the housing or an internal mounting frame of the device. This allows for a mechanical robust mounting of the user activation arrangement on the device. It furthermore allows a, mounting that is not restricted by mechanical or optical properties of the display, the display region or the translucent part of the activation member.

According to another feature of the invention, the activation member is pivotally mounted on the support element. This allows for a simple and robust mechanical mounting of the activation member and further allows for an activation to be associated with a pivotal movement of the activation member thereby providing a tactile feedback to the user.

According to another feature of the invention, the second part of the activation member is substantially opaque. This allows for a large variety of visually appealing designs. In particular it allows for the second part to have a colour compatible with the housing of the device. It furthermore allows for some mechanical details, such as for example the mounting arrangement for the activation member, to be hidden to the user.

According to another feature of the invention, the activation sensor is coupled to the second part. This allows for a particular advantageous implementation. For example, it allows for the sensor to be situated away from the display thereby being independent of the mechanical and optical requirements associated with the display.

According to another feature of the invention, the activation sensor is mounted on the support element. This allows for a particularly advantageous implementation where for example an increased mechanical robustness and/or compact mechanical design may be achieved.

According to another feature of the invention, the activation sensor is mounted between the support element and the second part. This allows for a very attractive and low complex implementation where for example pressing the activation member results in the second part engage with the activation sensor so as to provide the activation indication.

According to another feature of the invention, the activation sensor comprises a movement sensor operable to detect a movement of the activation member. This allows for a simple and low cost implementation using a simple activation sensor. The movement of the activation member may provide suitable tactile feedback to the user. The movement sensor may for example be a simple sensor which forms a contact between two electrical conductors when the activation member is moved from a first position to a second position by a user - e.g. by pressing on the activation member.

According to another feature of the invention, the activation sensor comprises a pressure sensor operable to detect a pressure exerted by the activation member. For example, the pressure sensor may be in permanent contact with the second part of the activation member and sense when pressure is put thereupon by a user pressing the activation member. This allows for a simple implementation using a simple and low cost sensor.

According to another feature of the invention, the activation sensor comprises a contact sensor operable to detect a contact formed by activation of the activation member. This allows for a simple implementation using a simple and low cost sensor.

According to another feature of the invention, the activation sensor comprises a popple dome contact operable to be activated by the activation member. This allows for a simple implementation using a simple and low cost sensor providing a tactile feedback.

According to another feature of the invention, the first part comprises a coloured translucent material. This allows for increased design possibilities and increased visual appeal. In particularly it allows for a colouration to be provided to the image displayed on the display region. This may not only improve the visual appeal but also facilitate operation of the device by providing additional information to the user. For example, the colour may depend on the general functionality of the user activation arrangement and different user activation arrangements of the device may have different associated colours.

According to another aspect of the invention, there is provided a device comprising a display and at least one user activation arrangements as described above. The invention thus allows for a device having a flexible, user friendly, easy to operate, low cost, visually appealing, mechanically robust and/or easy to manufacture user input means.

According to another feature of the invention, the device as claimed comprises a plurality of user activation arrangements. In particular, the device may comprise a plurality of user activation arrangements forming a keypad or keyboard.

According to another feature of the invention, the plurality of user activation arrangements is arranged around a periphery of the display. This provides for a visually appealing design which may furthermore be practical and enhance the ease of operation of the device.

According to another feature of the invention, the device further comprises a display processor operable to display an image on the display. The display processor may control the image of the whole display or of only part of the display. Specifically, the display processor may control the displayed image of one or more display regions associated with user arrangements.

According to another feature of the invention, the display processor is operable to display in the display region at least one selected image selected from a plurality of images. For example, a user activation arrangement may be associated with a letter which is dependent on a selected operation language. The display processor may select the image to correspond to the letter of the operation language active at any given time. The feature thus allows for a flexible information provision depending on the current conditions of the device. This may furthermore increase the user friendliness of the device substantially.

According to another feature of the invention, the selected image corresponds to a current function associated with the user activation arrangement of the picture region. The display processor may specifically select the selected image in response to a function associated with the user activation arrangement of the display region. The image of a display region may thus preferably convey information to the user of the function/operation of the device when the user activation arrangement is activated. This significantly facilitates the operation of the device while allowing for a flexible input arrangement where functions may be dynamically associated with e.g. different buttons or keys.

According to another feature of the invention, the display is a Liquid Crystal Display (LCD). This allows for a device having a particularly low cost and high performance display. An LCD display is particularly suitable for small portable devices.

According to another feature of the invention, the display is an active matrix display. This allows for a device having a particularly low cost and high performance display. An active matrix display is particularly suitable for small portable devices. The active matrix display may for example be a Thin Film Transistor (TFT) display.

Preferably the device is a portable device and in particular a personal communication device such as a mobile phone.

According to another feature of the invention, the device further comprises a lens between the display and the activation member. This allows for improved optical characteristics and an improved user perception of the display. The lens may specifically be adapted to suit the optical conditions associated with the user activation arrangement and specifically the optical coupling between the display and the translucent first part.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 illustrates a perspective view of a portable device in accordance with an embodiment of the invention;
FIG. 2 illustrates an exploded view of the portable device in accordance with an embodiment of the invention;
FIG. 3 illustrates a display in accordance with an embodiment of the invention;
FIG. 4 illustrates a keypad arrangement in accordance with an embodiment of the invention;
FIG. 5 illustrates a top view of a portable device having a plurality of user activation arrangements in accordance with an embodiment of the invention; and
FIG. 6 illustrates a cross-section view of a portable device comprising a user activation arrangement in accordance with an embodiment of the invention.

### Detailed Description of a Preferred Embodiment of the Invention

The following description focuses on an embodiment of the invention applicable to a portable device and in particular to a personal communication device such as a mobile phone. However, it will be appreciated that the invention is not limited to this application but may be applied to many other devices.

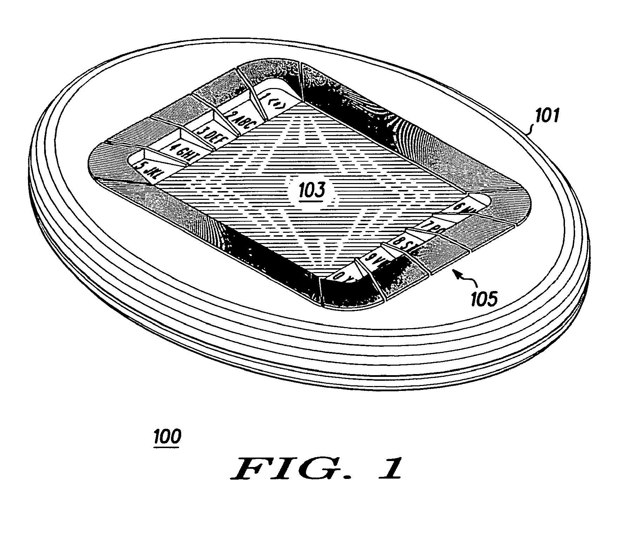

FIG. 1 illustrates a perspective view of a portable device 100 in accordance with an embodiment of the invention. Specifically, the portable device may be a personal communication device, a PDA, a gaming device or similar.

The portable device 100 comprises a housing 101 which in the preferred embodiment is formed by a front cover and a rear cover held together by suitable fastening means. Specifically, the front and rear cover may be screwed or glued together. The portable device 100 furthermore comprises a display 103 viewable through a display area formed by a cut-out in the housing. The portable device 100 further comprises a keypad 105 arranged around the periphery of the display area.

The keypad comprises a number of user activation arrangements in the form of keys or buttons that can be activated by a user. In the example of FIG.1, the portable device 100 comprises five buttons on each side of the display area allowing for ten different user activations.

The buttons of the keypad comprise a non-translucent part 107 which overlaps the housing 101. The non-translucent part 107 is in the preferred embodiment coloured to match the colour of the housing 101. In addition the button comprises a translucent part 109 which overlaps the display area and allows part of the display 103 to be viewed through the translucent part 109 of the button.

The button comprises the activation member which in the preferred embodiment is the top element of the button, visible to the user and operable to be pressed by the user when activating the button. The activation member is coupled to an activation sensor which is operable to detect when a user presses the activation member. The activation of the activation member causes an activation indication for the corresponding button to be generated. The activation indication may for example be a simple electrical conduction path being formed. Accordingly, circuitry of the device may detect that an electrical connection is formed and the device may act in response to this.

Thus, in the preferred embodiment, a simple push button user activation arrangement is used for each button of the keypad thereby allowing for a simple and robust mechanical construction. At the same time, each button has a part of the activation member overlapping the display area and thus each user activation arrangement has an associated display region viewable through the button. This allows for an image of the display region to be viewed through the button thereby emulating a labelling of the individual button. The image of the display region may be dynamically changed thus allowing for a flexible and dynamic labelling of each user activation arrangement.

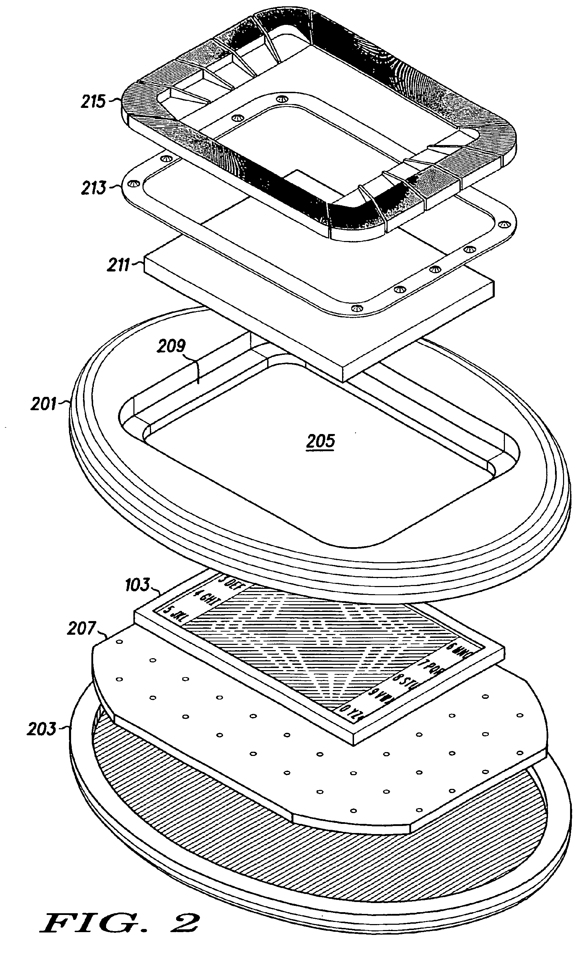

FIG. 2 illustrates an exploded view of the portable device in accordance with an embodiment of the invention. As illustrated in FIG. 2, the housing 101 of the portable device 100 of FIG. 1 comprises a front cover 201 and a rear cover 203. The front cover 201comprises a cut out 205 providing a hole through which the display 103 may be viewed.

Housed between the front and rear cover 201, 203 is the main Printed Circuit Board (PCB) 207 on which is mounted the various electronic components required for the operation of the device. Specifically, the main PCB 207 may comprise a microprocessor or micro controller and associated memory. The display 103 is furthermore mounted on the main PCB 207. The main PCB 207 is mounted on the front and/or rear cover 201, 203 such that the display 103 is aligned with the cut-out 205 of the front cover 201. Thus when the portable device 100 is assembled, the display 103 may be seen through the cut-out 205 of the housing 101.

In the illustrated preferred embodiment, the front cover 201 further comprises a depression 209 surrounding the cut-out 205. The depression 209 is adapted to receive a lens 211 which covers the display 103. The lens 211 protects the display 103 and adjusts the optical characteristics such that the viewability of the display 103 is improved.

In addition, the depression 209 is adapted to receive a sensor layer 213 which carries an activation sensor for each user activation arrangement, which in the preferred embodiment is a mechanical button or key. In the preferred embodiment, the activation sensor is a popple dome construction forming an electrical contact between two electrical conductors when depressed. The sensor layer 213 and the lens 211 are attached to the front cover 201 by a bonding process. Specifically, they may be glued to the front cover 201.

In addition, the portable device 100 of the preferred embodiment comprises a keypad arrangement 215 which is adapted to be mounted on the front cover 201. In the preferred embodiment, the keypad arrangement 215 is adapted to fit the depression 209 and to overlap both the front cover 201 and the cut-out 205. The keypad arrangement 215 comprises an activation member for each button of the portable device. The keypad arrangement 215 fits on the front cover 201 so that the activation members also overlap both the front cover 201 and the cut-out 205 and thus the display 103. Thus, when assembled, each activation member has a part overlapping the display 103 and a part overlapping the housing 101. The part of the activation member overlapping the display 103 is translucent thereby allowing the display under the activation member to be at least partially visible through the activation member. The activation member is furthermore mounted such that when pressed by a user it will exert a pressure on the corresponding popple dome of the sensor layer 213 thereby causing this to be depressed and an electrical contact to be formed.

Thus, a simple mechanical user activation arrangement is achieved using a simple mechanical assembly and construction. The user activation arrangement is mechanically robust and allows for a tactile feedback to the user. In addition, the user activation arrangement allows for an associated display region to be viewable through the user activation arrangement thereby allowing for a dynamic labelling of the key. The arrangement furthermore allows for a visually appealing design where the user activation arrangements specifically may straddle the boundary between the display and the housing thus allowing for a visually appealing transition.

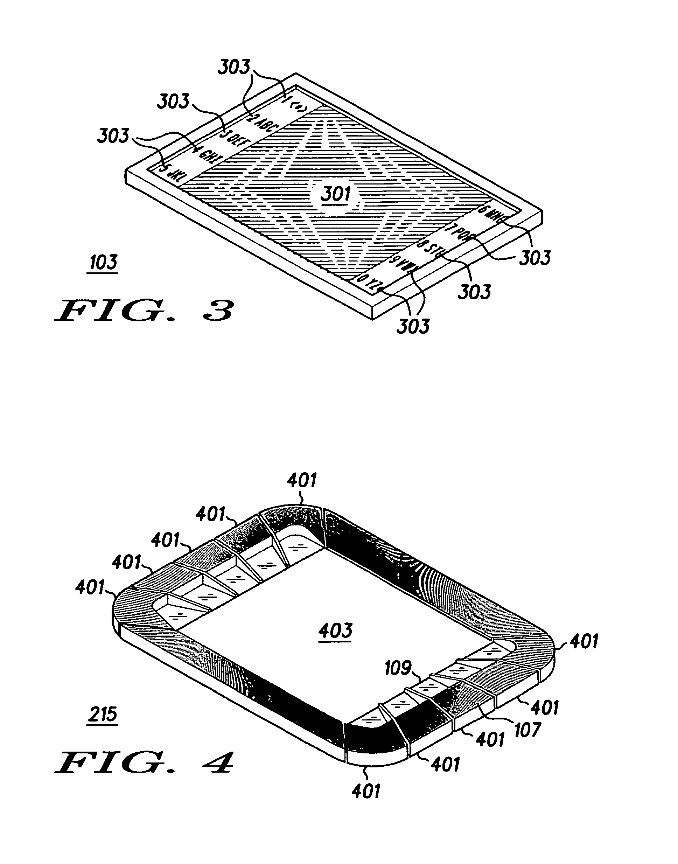

FIG. 3 illustrates a display 103 in accordance with an embodiment of the invention. The display 103 comprises a general display portion 301 which corresponds to the central area of the cut-out 205 of the front cover 201. Specifically, the general display portion 301 corresponds to the area not covered by the activation members of the keypad arrangement 215. The general display portion is used to display general information to the user in accordance with the current operation of the portable device 100.

In addition, the display 103 comprises a number of display regions 303 each of which is associated with an activation member of a user activation arrangement. Specifically, each of the display regions corresponds to the region of the display which is viewable through the translucent part of the activation member of the associated user activation arrangement. The display region 303 of a user activation arrangement may show an image providing information to the user relating to the current operation associated with the specific user activation arrangement. Thus the image may specifically correspond to a suitable labelling of the user activation arrangement for the current functionality associated therewith.

In the illustrated example of FIG. 3, the display regions 303 may show an appropriate letter or digit which will be entered by pressing the user activation arrangement associated with each display region.

It is within the contemplation of the invention that any suitable display technology may be used. However, the display may preferably be a Liquid Crystal Display (LCD) or an active matrix display such as a Thin Film Transistor (TFT) display.

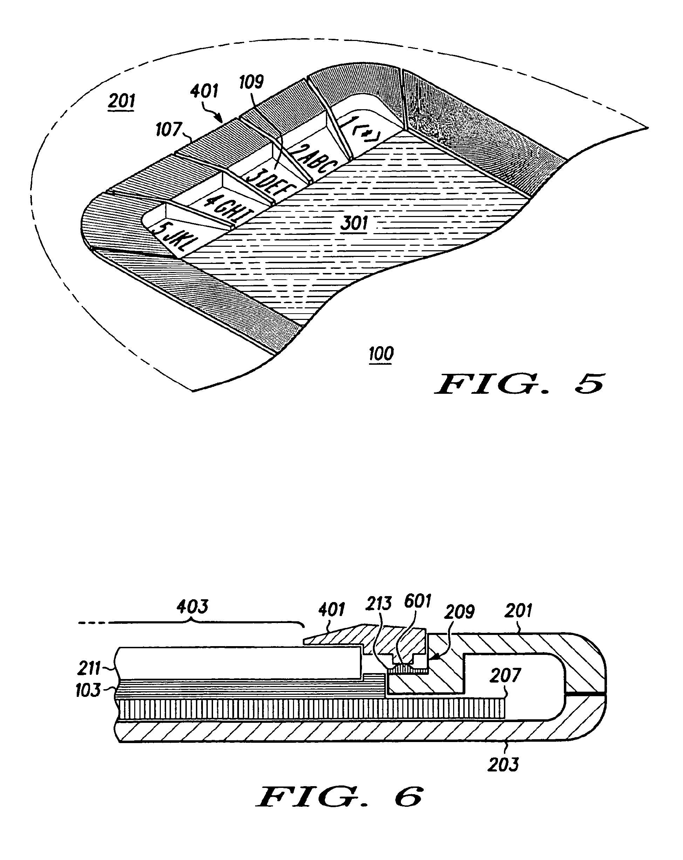

FIG. 4 illustrates a keypad arrangement in accordance with a preferred embodiment of the invention. The illustrated keypad arrangement corresponds to the keypad arrangement 215 of FIG. 2. The keypad arrangement 215 of the shown example comprises ten activation members 401 arranged on opposite sides of the display opening 403.

Each of the activation members 401 comprises a first translucent part 109 and a non-translucent part 107. The first part overlaps the display 103 when the keypad arrangement 215 is mounted on the front cover 201. The non-translucent part 107 may overlap the display 103 but in the preferred embodiment comprises at least a part that does not overlap the display 103. Thus in the preferred embodiment, the activation member 401 comprises a second part which does not overlap the display.

In some embodiments, the part of the activation element not overlapping the display may also be translucent. However, in the preferred embodiment, the part not overlapping the display is a non-translucent part 107which is substantially opaque whereby the mechanical mounting of the keypad arrangement 215, the sensor layer 213 and the lens 211 may be hidden from the user. The non-translucent part 107 may furthermore be coloured to provide a visually appealing design and may specifically be coloured so as to frame the display 103 within the front cover 201.

The translucent part 109 may specifically be substantially transparent thereby allowing for a clear view of the display region below the translucent part 109. In other embodiments, the translucent part 109 may be less transparent allowing for a different visual impression of the display regions 303 than for the general display region 301. Specifically, the translucent part 109 may be coloured whereby a different display colour of the display regions 303 and the general display region 301 may be achieved. In some embodiments, different colours may be used for different activation members 401 and a multicoloured keypad arrangement 215 may be implemented. The colouration of the translucent parts 109 of different activation members 401 may vary thereby allowing for example for a categorisation or visually clear grouping of different user activation arrangements. This may provide enhanced visual appeal and facilitate operation of the portable device 100.

FIG. 5 illustrates a top view of a portable device 100 having a plurality of user activation arrangements 401 in accordance with a preferred embodiment of the invention. FIG. 5 corresponds to the top view of the portable device 100 of FIG. 2 when assembled. As can be seen, each user activation arrangement has a visible activation member 401 arranged around the periphery of the display. The non-translucent part 107 of the activation member 401 provides a framing of the display and a visual transition between the housing 201 and the display 103. In addition, the non-translucent part hides the details of the underlying mechanical arrangement.

The translucent part 109 of the activation member 401 allows for the underlying display region 303 to be seen through the activation member 401 thereby providing a labelling of the activation member 401.

FIG. 6 illustrates a cross-section view of a portable device comprising a user activation arrangement in accordance with an embodiment of the invention. The portable device corresponds to the portable device 100 of FIG. 2 when assembled.

FIG. 6 illustrates the PCB 207 mounted on the rear cover 203. The display 103 is mounted on the PCB 207 with the lens 211 covering the display 103. In addition the front cover 201 forms the depression 209. An activation sensor in the form of a well known popple dome contact 601 is mounted on the front cover 201 in the depression 209. The activation member 401 is mounted on the front cover 201 such that the popple dome contact 601 is situated between the front cover 201 and the non-translucent part of the activation member 401. Thus the front cover 201 forms a support element on which both the activation sensor and the activation member 401 is mounted in the preferred embodiment.

Specifically, the activation member 401 may be pivotally mounted on the front cover 201. In such an embodiment, when a user presses on the activation member 401, this may move pivotally around an anchoring point. This movement may cause the non-translucent part of the activation member 401 to depress the popple dome contact 601. This will result in the popple dome contact 601 forming an electrical connection between two points thereby providing an activation indication that may be detected by a controller or processor of the portable device 100.

It is within the contemplation of the invention that any suitable activation sensor or activation indication may be used.

In some embodiments, a movement sensor and/or pressure sensor may be used to detect the activation of the user activation arrangement. For example, an activation member may have a magnetic polarisation which may cause a current in a coil of a movement sensor when the activation member is depressed. In a simpler embodiment, a movement sensor may simply detect whether the activation member is moved from a first to a second position. For example, the activation member may comprise a conducting element which is brought into contact with a second conducting element when the activation member is depressed.

In some embodiments, the pressure exerted by a user when pressing the user activation member may be detected. This pressure detection may be associated with a movement of the activation member or may be used in embodiments where a minimum movement of the activation member upon activation is desired.

The popple dome activation sensor of the preferred embodiment may be considered as a movement sensor and/or a pressure sensor.

The portable device of the preferred embodiment further comprises a display processor which controls the display and specifically controls the images displayed in the display regions associated with the user activation arrangements.

In the preferred embodiment, the display processor has a number of pre-stored images for each of the display regions. The current operation condition or state of the portable device is determined and the image corresponding to this operating condition is selected and displayed on the display region.

Specifically, in the preferred embodiment, an input processor determines the function that will currently result from the activation of a specific user activation arrangement. For example, pressing an activation member corresponding to a given button or key may at some stage result in the letter A being entered. This will be determined by the input processor which will feed this information to the display processor. The display processor will select the pre-stored image corresponding to the letter A and display this in the display region associated with this activation member. Thus, the activation member will be labelled A.

At another time, the current operating condition of the portable device may be such that pressing the same activation member will result in the Greek letter α being entered. Accordingly, this will be detected by the input processor which feeds the information to the display processor. In response, the display processor selects the pre-stored image corresponding to the Greek letter α and displays this in the display region associated with the activation member. Thus, the activation member will be labelled α.

The display processor and input processor are in the preferred embodiment functional modules of the same physical micro processor or micro controller.

It is within the contemplation of the invention, that the images displayed in the display regions may be updated in any suitable manner and at any suitable time. Preferably, the images are dynamically updated such as to reflect the function associated with the corresponding key at any given instant. In some embodiments, the image of the display regions is updated every time a button or key is pressed.

Thus the preferred embodiment allows for a device having one or more user activation arrangements combining the advantages of a touch sensitive display and a conventional mechanical button or key. Thus a simple user activation arrangement is achieved which may be simple and cheap to manufacture as well as mechanically robust and visually appealing. Furthermore, the user activation arrangement is very flexible and user friendly and allows for a dynamic labelling which may continually updated to reflect the current function associated with the user activation arrangement.

The invention can be implemented in any suitable form. The elements and components of an embodiment of the invention may be physically, functionally and logically implemented in any suitable way. Indeed the functionality may be implemented in a single unit, in a plurality of units or as part of other functional units.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. A user activation arrangement for a device having a display (103) which is viewed through a front cover (201) of the device; the user activation arrangement comprising:
an activation member (401) for activation by a user comprising a first part (109) and a second part (107);
an activation sensor (601) operably coupled to the second part (107) of the activation member and operable to generate an activation indication upon detection of the activation of the activation member (401);
wherein the first part (109) of the activation member overlaps a display region (303) of the display (103) and the first part is translucent whereby a displayed image of the display region may be viewed through the first part and wherein the second part does not overlap the display, the user activation arrangement being **characterised by**:
the activation member (401) being mounted on the front cover (201) such that the first (109) and second (107) parts of the activation member (401) are visible to a user.

2. A user activation arrangement as claimed in claim 1 wherein the second part (107) of the activation member is mounted on a support element (201) of the device.

3. A user activation arrangement as claimed in claim 2 wherein the activation member (401) is pivotally mounted on the support element (201).

4. A user activation arrangement as claimed in any of the claims claim 1 to 3 wherein the second part (107) of the activation member is substantially opaque.

5. A user activation arrangement as claimed in claim 2 or 3 wherein the activation sensor (601) is mounted on the support element (201) between the support element (201) and the second part (107).

6. A user activation arrangement as claimed in any of the previous claims wherein the first part (109) comprises a coloured translucent material.

7. A device comprising a display and at least one user activation arrangement as claimed in any one of the claims 1 to 6.

8. A device as claimed in claim 7 comprising a plurality of user activation arrangements as claimed in any one of the claims 1 to 6 wherein the plurality of user activation arrangements is arranged around a periphery of the display.

9. A device as claimed in any of the claims 7 to 8 further comprising a display processor operable to display an image on the display.

10. A device as claimed in claim 9 wherein the display processor is operable to display in the display region at least one selected image selected from a plurality of images and wherein the selected image corresponds to a current function associated with the user activation arrangement of the picture region.

11. A device as claimed in any of the claims 7 to 10 further comprising a lens (211) between the display and the activation member.

## Patentansprüche

1. Teilnehmer-Aktivierungsanordnung für eine Vorrichtung mit einem Display (102), welches durch eine vordere Abdeckung (201) der Vorrichtung hindurch betrachtet wird; wobei die Teilnehmer-Aktivierungsanordnung Folgendes aufweist:
ein Aktivierungs-Bauelement (401) zur Aktivierung durch einen Teilnehmer, welches ein erstes Bauteil (109) sowie ein zweites Bauteil (107) aufweist;
einen Aktvierungssensor (601), welcher betriebsbereit mit dem zweiten Bauteil (107) des Aktivierungs-Bauelements gekoppelt ist, und welches betriebsbereit ist, um im Anschluss an die Erfassung der Aktivierung des Aktivierungs-Bauelements (401) eine Aktivierungsanzeige zu erzeugen;
wobei das erste Bauteil (109) des Aktivierungs-Bauelements einen Displaybereich (303) des Displays (103) überlappt und das erste Bauteil durchsichtig ist, wodurch ein angezeigtes Bild des Displaybereichs durch das erste Bauteil hindurch betrachtet werden kann, und wobei das zweite Bauteil das Display nicht überlappt, wobei die Teilnehmer-Aktivierungsanordnung **dadurch gekennzeichnet ist, dass**:
das Aktivierungs-Bauelement (401) auf der vorderen Abdeckung (201) derart befestigt ist, dass das erste (109) sowie das zweite (107) Bauteil des Aktivierungs-Bauelements (401) für einen Teilnehmer sichtbar sind.

2. Teilnehmer-Aktivierungsanordnung nach Anspruch 1, **dadurch gekennzeichnet, dass** das zweite Bauteil (107) des Aktivierungs-Bauelements auf einem Stützelement (201) der Vorrichtung befestigt ist.

3. Teilnehmer-Aktivierungsanordnung nach Anspruch 2, **dadurch gekennzeichnet, dass** das Aktivierungs-Bauelement (401) schwenkbar auf dem Stützelement (201) gelagert ist.

4. Teilnehmer-Aktivierungsanordnung nach einem der Ansprüche 1 bis 3, **dadurch gekennzeichnet, dass** das zweite Bauteil (107) des Aktivierungs-Bauelements im Wesentlichen undurchsichtig ist.

5. Teilnehmer-Aktivierungsanordnung nach Anspruch 2 oder 3, **dadurch gekennzeichnet, dass** der Aktivierungssensor (601) auf dem.Stützelement (201) zwischen dem Stützelement (201) und dem zweiten Bauteil (107) befestigt ist.

6. Teilnehmer-Aktivierungsanordnung nach einem der vorhergehenden Ansprüche, **dadurch gekennzeichnet, dass** das erste Bauteil (109) einen farbigen durchsichtigen Werkstoff aufweist.

7. Vorrichtung, welche ein Display und mindestens eine Teilnehmer-Aktivierungsanordnung nach einem der Ansprüche 1 bis 6 aufweist.

8. Vorrichtung nach Anspruch 7, welche eine Vielzahl von Teilnehmer-Aktivierungsanordnungen nach einem der Ansprüche 1 bis 6 aufweist, **dadurch gekennzeichnet, dass** die Vielzahl an Teilnehmer-Aktivierungsanordnungen um die Umfangsfläche des Displays herum angeordnet ist.

9. Vorrichtung nach einem der Ansprüche 7 und 8, welche des Weiteren einen Displayprozessor aufweist, der zur Anzeige eines Bildes auf dem Display betriebsbereit ist.

10. Vorrichtung nach Anspruch 9, **dadurch gekennzeichnet, dass** der Displayprozessor betriebsbereit ist, um in dem Anzeigebereich mindestens ein ausgewähltes Bild anzuzeigen, welches aus einer Vielzahl von Bildern ausgewählt worden ist, und dass das ausgewählte Bild einer augenblicklichen Funktion entspricht, welche der Teilnehmer-Aktivierungsanordnung des Bildbereichs zugehörig ist.

11. Vorrichtung nach einem der Ansprüche 7 bis 10, welche des Weiteren eine Linse (211) zwischen dem Display und dem Aktivierungs-Bauelement aufweist.

## Revendications

1. Ensemble d'activation utilisateur pour un dispositif comprenant un écran (103) qui est vu à travers une partie de boîtier avant (201) du dispositif; l'ensemble d'activation utilisateur comprenant:
un élément d'activation (401) pour activation par un utilisateur comprenant une première partie (109) et une deuxième partie (107);
un détecteur d'activation (601) couplé de façon opérationnelle à la deuxième partie (107) de l'élément d'activation, et ayant pour fonction de générer une indication d'activation au moment de la détection de l'activation de l'élément d'activation (401);
dans lequel la première partie (109) de l'élément d'activation recouvre une zone d'affichage (303) de l'écran (103), et la première partie est translucide, moyennant quoi une image affichée de la zone d'affichage peut être vue à travers la première partie, et dans lequel la deuxième partie ne recouvre pas l'écran, l'ensemble d'activation utilisateur étant **caractérisé par le fait que**:
l'élément d'activation (401) est monté sur la partie de boîtier avant (201) de telle sorte que la première (109) et la deuxième (107) parties de l'élément d'activation (401) sont visibles par un utilisateur.

2. Ensemble d'activation utilisateur selon la revendication 1, dans lequel la deuxième partie (107) de l'élément d'activation est montée sur un élément de support (201) du dispositif.

3. Ensemble d'activation utilisateur selon la revendication 2, dans lequel l'élément d'activation (401) est monté de manière pivotante sur l'élément de support (201).

4. Ensemble d'activation utilisateur selon l'une quelconque des revendications 1 à 3, dans lequel la deuxième partie (107) de l'élément d'activation est sensiblement opaque.

5. Ensemble d'activation utilisateur selon la revendication 2 ou 3, dans lequel le détecteur d'activation (601) est monté sur l'élément de support (201) entre l'élément de support (201) et la deuxième partie (107).

6. Ensemble d'activation utilisateur selon l'une quelconque des revendications précédentes, dans lequel la première partie (109) est faite en un matériau translucide coloré.

7. Dispositif comprenant un écran et au moins un ensemble d'activation utilisateur selon l'une quelconque des revendications 1 à 6.

8. Dispositif selon la revendication 7 comprenant une pluralité d'ensembles d'activation utilisateur selon l'une quelconque des revendications 1 à 6, dans lequel la pluralité d'ensembles d'activation utilisateur est arrangée autour d'une périphérie de l'écran.

9. Dispositif selon l'une quelconque des revendications 7 à 8 comprenant en outre un processeur d'écran ayant pour fonction d'afficher une image sur l'écran.

10. Dispositif selon la revendication 9, dans lequel le processeur d'écran a pour fonction d'afficher dans la zone d'affichage au moins une image sélectionnée, sélectionnée parmi une pluralité d'images, et dans lequel l'image sélectionnée correspond à une fonction actuellement associée à l'ensemble d'activation utilisateur de la région d'image.

11. Dispositif selon l'une quelconque des revendications 7 à 10 comprenant en outre une lentille(211) entre l'écran et l'élément d'activation.
